# EUROPEAN PATENT APPLICATION

(11) **EP 3 346 278 A1**
(43) Date of publication of application: **11.07.2018**
(21) Application number: 17211253.4
(22) Date of filing: 29.12.2017
(51) Int. Cl.: G01P 21/02, G01S 5/00, G01S 19/20, G01S 19/23, G01S 13/93, G01S 17/93, G08G 5/00, G01S 5/02, G01S 7/00

(54) **SYSTEM AND METHODS TO EVALUATE OR IMPROVE OWN SHIP SENSOR DATA IN CONNECTED VEHICLES**

(30) Priority: 04.01.2017 US 201715397995
(71) Applicant: Honeywell International Inc., Morris Plains, NJ 07950 (US)
(72) Inventor: SONGA, Anil Kumar, Morris Plains, NJ New Jersey 07950 (US); VENKATASWAMY, Sadguni, Morris Plains, NJ New Jersey 07950 (US)
(74) Representative: Houghton, Mark Phillip

(57) **Abstract**

Systems and methods for monitoring integrity of the data from sensors onboard a vehicle using information provided by another vehicle are provided. In one embodiment, a system on a first vehicle includes one or more onboard sensors configured to obtain data regarding the first vehicle. The system further includes at least one processor coupled to a memory, wherein the at least one processor is configured to: receive information regarding the first vehicle from a second vehicle, wherein the received information is obtained using at least one respective sensor from the second vehicle; and monitor integrity of the data from the one or more onboard sensors using the received information from the second vehicle prior to detecting a potential fault in the one or more onboard sensors from resources onboard the first vehicle.

## Description

### BACKGROUND

Aircraft include a variety of onboard sensors that provide data to the flight computers and other onboard systems. Onboard system errors and system failures on an aircraft can be catastrophic. A failure to promptly recognize and respond to erroneous sensor data indications can result in a loss of control of the aircraft, reversion to flight control laws that provide less flight envelope protection than a normal law/mode of operation, disconnection of autopilot functionality of the aircraft, or the like. Pilots may not become aware of a problem with erroneous sensor data until the aircraft has adopted an unusual pitch attitude, which makes recovery and further control of the situation more challenging, especially if the aircraft has entered a stall.

Aircraft currently include safety mechanisms to monitor and/or correct the data obtained from an onboard sensor by comparing it to data obtained from multiple other onboard sensors of the aircraft. However, such systems have not been completely effective in preventing dangerous situations from occurring. For example, there have been numerous incidents where a flight crew has lost control of an aircraft after an improper response to erroneous airspeed conditions caused by icing on pitot probes or other onboard sensors. Some of these incidents have been recovered from, but others have resulted in loss of the aircraft and all occupants.

For the reasons stated above and for other reasons stated below which will become apparent to those skilled in the art upon reading and understanding the specification, there is a need in the art for improved methods of detecting erroneous sensor data from sensors onboard a vehicle.

### SUMMARY

The embodiments of the present disclosure provide systems and methods for monitoring integrity of the data from sensors onboard a vehicle using information provided by another vehicle and will be understood by reading and studying the following specification.

In one embodiment, a system on a first vehicle includes one or more onboard sensors configured to obtain data regarding the first vehicle. The system further includes at least one processor coupled to a memory, wherein the at least one processor is configured to: receive information regarding the first vehicle from a second vehicle, wherein the received information is obtained using at least one respective sensor from the second vehicle; and monitor integrity of the data from the one or more onboard sensors using the received information from the second vehicle prior to detecting a potential fault in the one or more onboard sensors from resources onboard the first vehicle.

### DRAWINGS

Understanding that the drawings depict only exemplary embodiments and are not therefore to be considered limiting in scope, the exemplary embodiments will be described with additional specificity and detail through the use of the accompanying drawings, in which:
Figure 1 is a block diagram of an example system according to one embodiment of the present disclosure;
Figure 2 is block diagram of an example vehicle according to one embodiment of the present disclosure;
Figure 3 is a flow chart of an example method of operation for a data aggregation system according to one embodiment of the present disclosure; and
Figures 4A-4B illustrate example views of vehicles during operation according to one embodiment of the present invention;
Figure 5 is a flow chart of an example method of evaluating sensor data according to one embodiment of the present disclosure;
Figure 6 is a flow chart of an example method of monitoring integrity of onboard sensor data of a vehicle using information from another vehicle according to one embodiment of the present disclosure; and
Figure 7 is a flow chart of an example method of operating of a vehicle according to one embodiment of the present disclosure.

In accordance with common practice, the various described features are not drawn to scale but are drawn to emphasize specific features relevant to the exemplary embodiments.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, the method presented in the drawing figures and the specification is not to be construed as limiting the order in which the individual steps may be performed. The following detailed description is, therefore, not to be taken in a limiting sense.

The embodiments described below include systems and methods for monitoring integrity of the data from sensors onboard a vehicle using information provided by another vehicle. In some embodiments, a vehicle receives data from one or more onboard sensors and also receives information from another vehicle about one or more operating conditions of the vehicle. The vehicle monitors the integrity of data from the one or more onboard sensors using the information received from the other vehicles. In exemplary embodiments, the vehicle determines whether a difference between the data obtained from its own onboard sensors and the information from the other vehicle exceeds a threshold and adjusts operation based on the determination.

In exemplary embodiments, the vehicle is configured to monitor the integrity of the data from its onboard sensors with the information provided by the other vehicles prior to detecting a potential fault in the data from the one or more onboard sensors. Earlier notification of an integrity problem with the data from the one or more onboard sensors increases the awareness of the pilots of the vehicle regarding faulty data provided by an onboard sensor due to icing or other hazardous operating conditions. This increased awareness may prevent a loss of control of the vehicle or a fatal accident that would occur using common fault detection techniques.

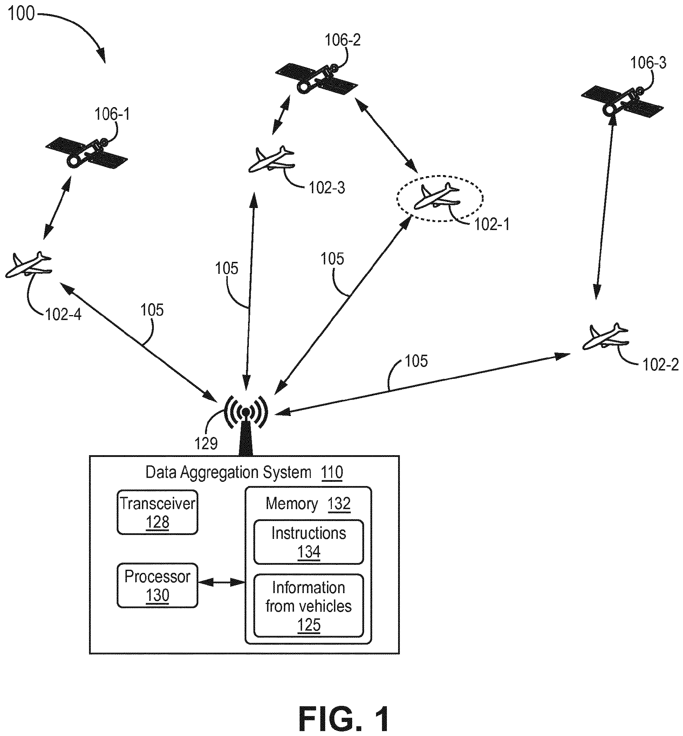

Figure 1 illustrates a block diagram of a system 100 according to one embodiment of the present disclosure. In exemplary embodiments, the system 100 includes vehicles 102, a data aggregation system 110, and one or more communication satellites 106. While the vehicles 102 in Figure 1 are depicted as aircraft, it should be understood that this is for illustration purposes and the vehicle can also be other types of vehicles. In exemplary embodiments, the vehicles 102 can be an aircraft, ground-based vehicle, marine vehicle, or the like. This definition of vehicle applies to all embodiments described in the specification. Further, while four vehicles are shown in Figure 1, it should be understood that this is for illustration purposes and that any desired amount of two or more vehicles may be used to implement the evaluation and improvement of sensor data.

The system 100 will be described from the perspective of the first vehicle 102-1. The first vehicle 102-1 is the vehicle of interest and is also referred to herein as the "own ship." In the example shown in Figure 1, there are three additional vehicles 102-2, 102-3, 102-4 within close proximity to the own ship 102-1. It should be understood that in some embodiments, each of the vehicles 102 shown in Figure 1 can include the features to enable the respective vehicle to evaluate or improve its own sensor data. Further, in some embodiments, surrounding vehicles or another external system can evaluate the sensor data of the own ship.

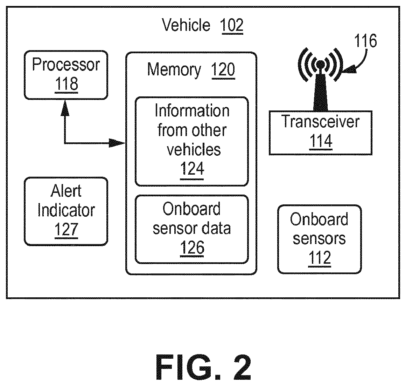

Figure 2 is a block diagram of an example vehicle 102 according to one embodiment of the present disclosure. The vehicle 102 includes one or more onboard sensors 112, at least one transceiver 114 coupled to an antenna 116, at least one processor 118 coupled to a memory 120, and an alert indicator 127.

In exemplary embodiments, the one or more onboard sensors 112 include one or more sensors configured to provide data 126 regarding the vehicle 102 itself. This type of data is referred to herein as "own ship data." The one or more sensors 112 configured to provide own ship data 126 can include a static port, a pitot probe, a pitot-static probe, an angle of attack vane, Global Navigation Satellite System (GNSS) sensor, or the like. The own ship data 126 is used to determine one or more operating conditions (e.g. speed, altitude) of the vehicle itself. For example, data from a pitot probe is used to determine airspeed of an aircraft.

In exemplary embodiments, the one or more onboard sensors 112 of the vehicle 102 may further include one or more systems configured to provide information regarding other vehicles in the vicinity of the vehicle. In exemplary embodiments, such systems may include an Enhanced Ground Proximity Warning System (EGPWS), a millimeter wave radar, an ADS-B IN and OUT, a radar system, a Light Detection and Ranging (LIDAR) system, an Enhanced Vision System (EVS), or a Traffic Collision Avoidance System (TCAS), or the like. These systems enable the vehicle to obtain information about other vehicles, such as position, speed, altitude, or the like.

The at least one transceiver 114 is coupled to at least one antenna 116 and incorporates electronics and other components to establish bidirectional communication with other vehicles or the data aggregation system. In exemplary embodiments, the at least one transceiver 114 is configured to communicate directly with other vehicles, using very high frequency (VHF) radio broadcasts, satellite communications (SATCOM), Aircraft Communications Addressing and Reporting System (ACARS) datalinks, or the like. The at least one transceiver 114 may also obtain information from the other vehicles 102 via the data aggregation system 110. In exemplary embodiments, the other vehicles 102 transmit the information regarding the first vehicle 102-1 to the data aggregation system 110, which is then relayed to the vehicle via VHF radio signals, SATCOM, ACARS datalinks, or the like.

The data aggregation system 110 aggregates and processes one or more types of information provided by the vehicles 102. In one embodiment, the data aggregation system 110 is a ground-based system that includes one or more ground stations. In other embodiments, the data aggregation system 110 can be implemented on a system in space or using a distributed architecture onboard the vehicles 102. In exemplary embodiments, the information provided by the vehicles 102 can include, but is not limited to, information regarding one or more operating parameters of other vehicles 102. For example, the one or more operating parameters can include position, speed, altitude, and the like. In exemplary embodiments, the received information from the one or more second vehicles can have various levels of processing applied to it prior to being sent by the one or more second vehicles. For example, the received information can include raw data from a sensor, data from a sensor that has been enhanced using software or another system, processed information, or the like.

In some embodiments, the data aggregation system 110 comprises at least one transceiver 128 coupled to at least one antenna 129 and incorporates electronics and other components to establish bidirectional wireless data communication links 105 with systems aboard the vehicles 102. Such communication links 105 may include, but are not limited to, ACARS datalinks, VHF radio broadcasts, and/or SATCOM. It should be appreciated that in some implementations, the transceiver 128 may be located at the same physical ground facility as the data aggregation system 110 or instead located at some remote distance from each other and connected by a communication link. The data aggregation system 110 also includes at least one processor 130 coupled to a memory 132, which may be used for storing information 125 collected from, and shared with, the plurality of vehicles 102. The at least one processor 130 includes or functions with software programs, firmware, or other computer readable instructions 134 for carrying out various methods, process tasks, calculations, and controls functions related to storing and communicating information regarding one or more operating parameters of vehicles.

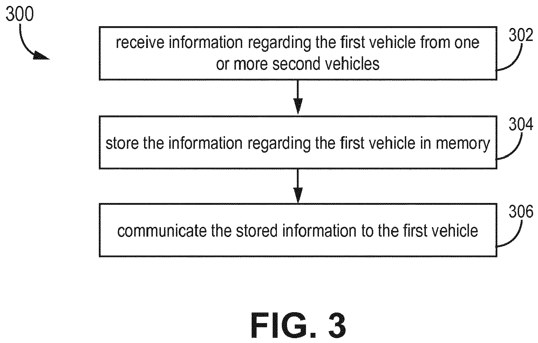

Figure 3 is a flow chart illustrating an example method 300 of operation of the data aggregation system. The functions, structures, and other description of elements for such embodiments described above may apply to like named elements of method 300 and *vice versa.* In exemplary embodiments, the method 300 is performed by the first vehicle 102-1 discussed above with reference to Figures 1-2.

The method begins with receiving information 125 regarding the first vehicle 102-1 from one or more second vehicles 102-2, 102-3, 102-4 (block 302). In exemplary embodiments, the data aggregation system 110 receives information 125 regarding a plurality of vehicles 102. For example, the data aggregation 110 may receive information regarding each vehicle in a fleet of vehicles 102. Such information is provided by surrounding (second) vehicles 102 as is discussed herein in further detail.

The method proceeds with storing the information 125 regarding the first vehicle 102-1 from one or more second vehicles 102-2, 102-3, 102-4 in memory 132 (block 304). In exemplary embodiments, the information 125 regarding the first vehicle 102-1 is timestamped. In some embodiments, the information 125 regarding the first vehicle 102-1 is associated with an identification of the second vehicle 102-2, 102-3, 102-4 that sent the information 125. In exemplary embodiments, the data aggregation system 110 stores the information 125 regarding the first vehicle 102-1 in a database or other data structure.

The method proceeds with communicating the stored information 125 to the first vehicle 102-1 (block 306). In exemplary embodiments, the data aggregation system 110 communicates the information 125 to the first vehicle 102-1 using VHF radio signals, SATCOM, ACARS datalinks, or the like. In some embodiments, the data aggregation system 110 is onboard the first vehicle 102-1 and provides the stored information 125 to the at least one processor 118 of the first vehicle 102-1 via a wired or wireless communication medium.

The at least one processor 118 of the first vehicle 102-1 is configured to evaluate or improve the own ship sensor data 126 using the information 125 provided by the second vehicles 102-2, 102-3, 102-4 according to the methods discussed herein.

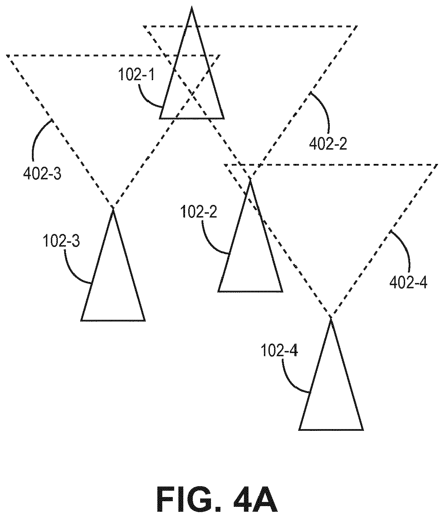

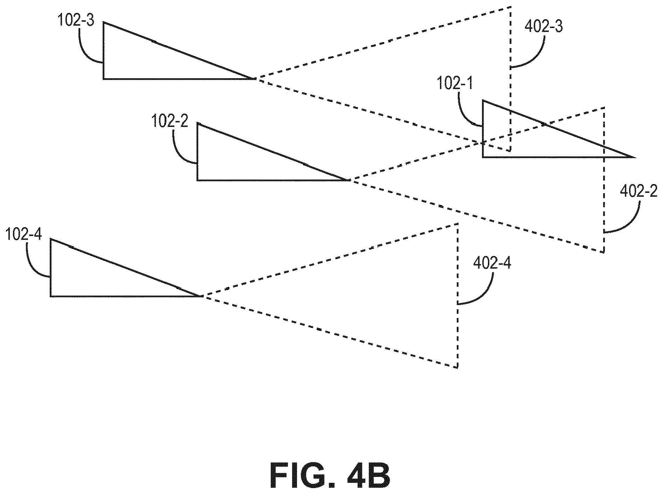

Figures 4A-4B illustrate example views of vehicles during operation according to one embodiment of the present invention. In particular, Figures 3A-3B are top and side views, respectively, of the same vehicles during operation. While four vehicles 102 are shown in Figures 4A-4B, it should be understood that this is for illustration purposes and that any amount of two or more vehicles could be included. The functions, structures, and other description of elements for such embodiments described above may apply to like named elements in Figures 4A-4B and *vice versa.*

The first vehicle 102-1 is within a coverage zone or field of view 402 of the one or more sensors of some of the surrounding vehicles but not all of the surrounding vehicles. In particular, the first vehicle 102-1 is within the field of view of the one or more sensors of vehicles 102-2, 102-3 but not within the field of view of the sensors of vehicle 102-4. Therefore, only vehicles 102-2, 102-3 are capable of providing information to the first vehicle 102-1 regarding the operation of the first vehicle. In exemplary embodiments, the vehicles 102-2, 102-3 are configured to communicate information regarding the first vehicle 102-1 directly to the first vehicle 102-1 and/or indirectly through the data aggregation system 110.

The first vehicle 102-1 obtains the information gathered by the other vehicles and uses the information to monitor the integrity of the own ship data provided by the one or more onboard sensors on the first vehicle. In exemplary embodiments, the first vehicle 102-1 is configured to compare the own ship data to the information provided by the other vehicles prior to detecting a potential fault in the own ship data from the one or more onboard sensors. In exemplary embodiments, the one or more onboard sensors used to obtain the own ship data are different than the respective sensors of the other vehicles used to obtain the information provided to the own ship. For example, the first vehicle 102-1 can compare its own ship speed information provided by a pitot probe to the information regarding speed of the first vehicle 102-1 obtained by the other vehicles 102-2, 102-3 using a radar system or another type of system discussed above.

In exemplary embodiments, the at least one processor of the first vehicle 102-1 is configured to determine whether or not the difference between the own ship data and the received information from the other vehicles exceeds a threshold. If the difference between the own ship data and the information received from the other vehicles exceeds a threshold, a warning or alert can be issued (for example, using the alert indicator 127) to the crew piloting the vehicle indicating that the own ship data provided by the onboard sensors may be faulty. An alert can also be communicated to the one or more second vehicles 102-2, 102-3, 102-4 or other surround vehicles. In embodiments where the first vehicle is an aircraft, an alert may also be issued to air traffic control, airlines operations, or other entities that manage flight operations. In some embodiments, if the difference between the own ship data and the information received from the other vehicles exceeds a threshold, then the first vehicle 102-1 is configured to operate using the information provided by the other vehicles instead of using the own ship data provided by the one or more onboard sensors.

In exemplary embodiments, the threshold can correspond to a numerical value, a percentage, or the like. The threshold may be determined, for example, during testing of the system or based on operational requirements for the vehicle. In some embodiments, the threshold may correspond to an acceptable range of error for an operational parameter where the vehicle is able to maintain operation without an increased risk of safety concern. For example, the threshold may correspond to an error in an airspeed calculation where an aircraft is still able to maintain operation without having to adjust altitude or operation at a rate that increases the likelihood of an accident.

In exemplary embodiments, the at least one processor of the first vehicle 102-1 is configured to evaluate the quality or integrity of the information received from the other vehicles. In exemplary embodiments, the quality or integrity of the information is related to a position of the second vehicle 102-2, 102-3, 102-4 with respect to the first vehicle 102-1, a coverage of the first vehicle by a sensor of the second vehicle, or a difference between the received information and the data obtained from the one or more onboard sensors of the first vehicle. The at least one processor of the first vehicle 102-1 may also be configured to compare the information received from multiple vehicles to determine if information from one of the other vehicles is faulty or inaccurate. As part of the quality or integrity determination, the at least one processor can also be configured to rank the information received from the other vehicles from highest quality to lowest quality. For example, if one of the other vehicles is closer in proximity to the first vehicle 102-1 than another, the information from the closer vehicle can be ranked higher because the information is likely to be more accurate and have less error.

In exemplary embodiments, the at least one processor of the first vehicle 102-1 is configured to combine the information provided by other vehicles. In some embodiments, the at least one processor averages the information provided by multiple vehicles. In some embodiments, the at least one processor is configured to weight respective information from the other vehicles based on the quality or integrity determination discussed above. For example, the at least one processor can be configured to apply greater weight to information from vehicle 102-2 that is deemed to have a higher quality than information from other vehicles 102-3, 102-4.

Although having the own ship monitor the integrity of its own ship sensor data using the methods described herein may be sufficient, enabling additional vehicles to make similar evaluation of the own ship data for the first vehicle can provide another level of safety through redundancy. Therefore, in some embodiments, one or more of the second vehicles 102-2, 102-3, 102-4 are also configured to monitor the integrity of the data from the one or more onboard sensors 112 of the first vehicle 102-1 ("own ship data") in a manner similar to that described above with respect to the first vehicle 102-1. In such embodiments, the one or more second vehicles 102-2, 102-3, 102-4 receive the data from the one or more onboard sensors 112 of the first vehicle 102-1 and the information provided by other vehicles regarding the first vehicle 102-1, including the information it provides itself, if applicable. The one or more second vehicles 102-2, 102-3, 102-4 are configured to compare the own ship data to the information provided by the other vehicles prior to detecting a potential fault in the own ship data from the one or more onboard sensors.

In exemplary embodiments, the at least one processor of the one or more second vehicles 102-2, 102-3, 102-4 is configured to determine whether or not the difference between the own ship data for the first vehicle 102-1 and the provided information from the second vehicles exceeds a threshold. If the difference between the own ship data and the information received from the other vehicles exceeds a threshold, a warning or alert can be issued from the one or more second vehicles 102-2, 102-3, 102-4 to the first vehicle and/or other surrounding vehicles indicating that the own ship data provided by the onboard sensors may be faulty. In embodiments where the first vehicle is an aircraft, an alert may also be issued to air traffic control, airlines operations, or other entities that manage flight operations. In exemplary embodiments, the threshold used by the one or more second vehicles 102-2, 102-3, 102-4 corresponds to the threshold used by the first vehicle 102-1.

In exemplary embodiments, the at least one processor of the one or more second vehicles 102-2, 102-3, 102-4 is configured to evaluate the quality or integrity of the information received from the other vehicles as described above. As part of the quality or integrity determination, the at least one processor can also be configured to rank the information received from the other vehicles from highest quality to lowest quality as described above. In exemplary embodiments, the at least one processor of the one or more second vehicles 102-2, 102-3, 102-4 is also configured to combine the information provided by other vehicles and/or weight respective information from the other vehicles based on the quality or integrity determination as discussed above.

Processing and/or communication resources may be limited for vehicles during operation or further redundancy may be desired. Therefore, in some embodiments, an external system (such as, for example, the data aggregation system 110) is configured to monitor the integrity of the data from the one or more onboard sensors 112 of the first vehicle 102-1 ("own ship data") in a manner similar to that described above with respect to the one or more second vehicles 102-2, 102-3, 102-4. In such embodiments, the different system receives the data from the one or more onboard sensors 112 of the first vehicle 102-1 and the information provided by the one or more second vehicles 102-2, 102-3, 102-4. The different system is configured to compare the own ship data from the first vehicle 102-1 to the information provided by the other vehicles prior to detecting a potential fault in the own ship data from the one or more onboard sensors.

In exemplary embodiments, at least one processor of the external system is configured to determine whether or not the difference between the own ship data and the provided information from the one or more second vehicles exceeds a threshold. If the difference between the own ship data and the information received from the one or more second vehicles 102-2, 102-3, 102-4 exceeds a threshold, a warning or alert can be issued from the external system to the first vehicle 102-1, the second vehicles, and/or other surround vehicles indicating that the own ship data provided by the onboard sensors of the first vehicle may be faulty. In exemplary embodiments, the threshold used by the external system corresponds to the threshold used by the first vehicle 102-1 discussed above.

In exemplary embodiments, the at least one processor of the external system is configured to evaluate the quality or integrity of the information received from the other vehicles as described above. As part of the quality or integrity determination, the at least one processor can also be configured to rank the information received from the second vehicles from highest quality to lowest quality as discussed above. In exemplary embodiments, the at least one processor of the external system is also configured to combine the information provided by other vehicles and/or weight respective information from the other vehicles based on the quality or integrity determination as discussed above.

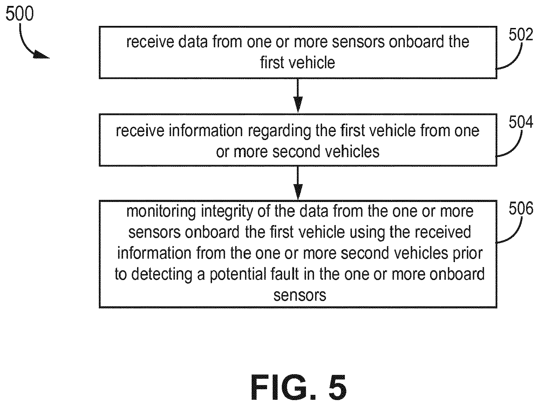

Figure 5 is a flow chart illustrating an example method 500 of evaluating sensor data of a vehicle using information from another vehicle. The functions, structures, and other description of elements for such embodiments described above may apply to like named elements of method 500 and *vice versa.* In exemplary embodiments, the method 500 is performed by the first vehicle 102-1 discussed above with reference to Figures 1-4B. In some embodiments, the method 500 is performed by the one or more second vehicles 102-2, 102-3, 102-4 or by an external system discussed above with reference to Figures 1-4B.

The method begins with receiving data from one or more sensors onboard the first vehicle (block 502). In exemplary embodiments, the one or more sensors configured to provide own ship data can include a static port, a pitot probe, a pitot-static probe, an angle of attack vane, Global Navigation Satellite System (GNSS) sensor, or the like.

The method proceeds with receiving information regarding the first vehicle from one or more second vehicles (block 504). In exemplary embodiments, the received information from each of the one or more second vehicles is obtained using at least one respective sensor of the respective one or more second vehicles. The at least one respective sensor may include such systems as an Enhanced Ground Proximity Warning System (EGPWS), a millimeter wave radar, an ADS-B IN and OUT, a radar system, a Light Detection and Ranging (LIDAR) system, an Enhanced Vision System (EVS), or a Traffic Collision Avoidance System (TCAS), or the like. In exemplary embodiments, the received information from the one or more second vehicles can have various levels of processing applied to it prior to being sent by the one or more second vehicles. For example, the received information can include raw data from a sensor, data from a sensor that has been enhanced using software or another system, processed information, or the like.

The method proceeds with monitoring integrity of the data from the one or more sensors onboard the first vehicle using the received information from the one or more second vehicles prior to detecting a potential fault in the one or more onboard sensors based on data generated onboard the first vehicle (block 506).

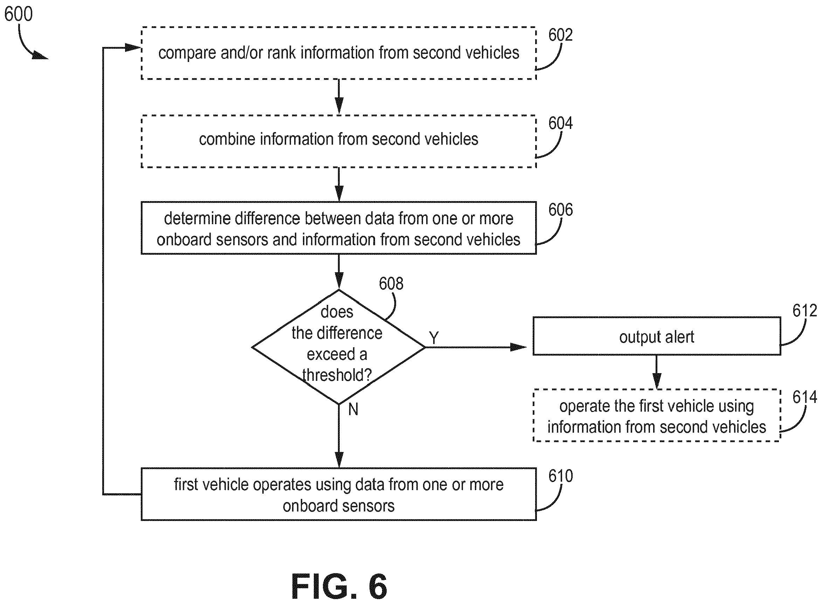

Figure 6 is a flow chart illustrating an example method 600 of monitoring integrity of onboard sensor data of a vehicle using information from another vehicle. The functions, structures, and other description of elements for such embodiments described above may apply to like named elements of method 600 and *vice versa.* In exemplary embodiments, the method 600 is performed by the first vehicle 102-1 discussed above with reference to Figures 1-5. In some embodiments, the method 600 is performed by the one or more second vehicles 102-2, 102-3, 102-4 or by an external system discussed above with reference to Figures 1-5.

In exemplary embodiments, the first vehicle, one or more second vehicles, or external system receives information from a plurality of second vehicles. In such embodiments, the method optionally begins with comparing and/or ranking the information from the second vehicles (block 602). In exemplary embodiments, the information received from multiple second vehicles is compared to determine if information from one of the second vehicles is faulty or inaccurate. In exemplary embodiments, the information from the second vehicles is ranked based on the quality or integrity of the information from the second vehicles. In exemplary embodiments, the quality or integrity of the information is related to a position of the second vehicle with respect to the first vehicle or a coverage of the first vehicle by a sensor of the second vehicle. For example, if one of the second vehicles is closer to the first vehicle than another second vehicle and/or if the systems on the second vehicle covers more of the first vehicle, the information from the second vehicle that is closer to and/or covering more of the first vehicle can be ranked higher because the information is likely to be more accurate and have less error.

In embodiments with a plurality of second vehicles providing information, the method optionally proceeds with combining the received information from the second vehicles (block 604). In some embodiments, the received information is combined by averaging the information provided by the plurality of second vehicles. In other embodiments, respective weights are applied to the information from the plurality of second vehicles based on the quality, integrity, or ranking determination discussed above.

The method proceeds with determining a difference between data from the one or more onboard sensors of the first vehicle and the received information from the one or more second vehicles (block 606). In exemplary embodiments where the information from the one or more second vehicles is combined, the difference is between the data from the one or more onboard sensors of the first vehicle and the combined information from the second vehicles. In exemplary embodiments where the information from the one or more second vehicles is not combined, the difference is determined individually for the respective information provided from respective second vehicles.

The method proceeds with determining whether the difference exceeds a threshold (block 608). If the difference does not exceed a threshold, the method proceeds with the first vehicle operating using data from the one or more onboard sensors of the first vehicle (block 610). In other words, the first vehicle operates in a normal fashion using data obtained by the one or more onboard sensors of the first vehicle. In embodiments where method 600 is performed by the one or more second vehicles or the external system, the method can also include providing an indication that the own ship data for the first vehicle is valid. The method proceeds from step 610 back to optional steps 602-604 or step 606 if the optional steps are not performed. Method 600 is performed throughout the entire operation of the first vehicle.

If the difference does exceed a threshold, the method proceeds with outputting an alert (block 612). In exemplary embodiments, the alert is displayed to the pilot of the first vehicle using an alert indicator, which may be included in a graphical user interface or other display device. In some embodiments, outputting an alert also includes outputting an alert message outside of the first vehicle. For example, an alert message could be communicated to the one or more second vehicles, air traffic controllers, airline operator, or the like.

In some embodiments, the method optionally proceeds with operating the first vehicle using information received from the one or more second vehicles (block 614). In exemplary embodiments, where the first vehicle is operating using information received from the one or more second vehicles, the information from the one or more second vehicles is time stamped to enable the first vehicle to adequately implement operation based on the information from the second vehicles. In particular, the at least one processor of the first vehicle can execute an alternative operational mode that accounts for the added delay due to the time it takes the one or more second vehicles to communicate the information to the first vehicle.

In exemplary embodiments, the first vehicle receives information from only one second vehicle. The one or more onboard sensors of the first vehicle can be less reliable or more prone to faults than the systems of the second vehicle that obtain the information regarding the first vehicle. Thus, in some embodiments, the first vehicle assumes that the information from the second vehicle is more accurate than the data from the one or more onboard sensors. In other embodiments where the first vehicle receives information from multiple second vehicles, the first vehicle compares the information received from the multiple second vehicles and determines whether the multiple second vehicles are providing consistent information. If so, then the first vehicle can assume that the information provided by the multiple second vehicles is accurate.

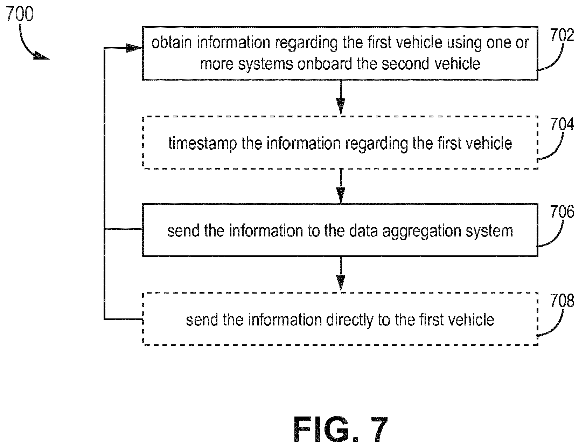

Figure 7 is a flow chart illustrating an example method 700 of operation for a second vehicle. The functions, structures, and other description of elements for such embodiments described above may apply to like named elements of method 700 and *vice versa.* In exemplary embodiments, the method 700 is performed by the second vehicles 102-2, 102-3, 102-4 discussed above with reference to Figures 1-6.

The method begins with obtaining information regarding the first vehicle using one or more systems onboard the second vehicle (block 702). In exemplary embodiments, such systems may include an Enhanced Ground Proximity Warning System (EGPWS), a millimeter wave radar, an ADS-B IN and OUT, a radar system, a Light Detection and Ranging (LIDAR) system, an Enhanced Vision System (EVS), or a Traffic Collision Avoidance System (TCAS), or the like. These systems enable the second vehicle to obtain information about other vehicles, such as position, speed, altitude, or the like. In exemplary embodiments, step 702 includes performing various levels of processing applied on the information. For example, the information can include raw data from a sensor, data from a sensor that has been enhanced using software or another system, processed information, or the like.

The method optionally proceeds with timestamping the information regarding the first vehicle (704). In exemplary embodiments, the information regarding the first vehicle is timestamped using a clock that is synchronized for the first vehicle and the one or more second vehicles. The information from the one or more second vehicles can be time stamped to enable the first vehicle to adequately implement operation based on the information from the second vehicles.

The method proceeds with sending the information to the data aggregation system (block 706). In exemplary embodiments, the second vehicle sends the information as part of an ADS-B message. In exemplary embodiments, the second vehicle communicates with the data aggregation system via SATCOM, VHF radio broadcasts, ACARS datalinks, or the like. In some embodiments, where the data aggregation system has a distributed architecture on the vehicles, the second vehicle provides the information directly to the data aggregation system via a wired or wireless communication medium on the second vehicle.

The method optionally proceeds with sending the information directly to the first vehicle (block 708). In exemplary embodiments, the second vehicle sends the information directly to the first vehicle if the two vehicles are within a threshold distance from one another. For example, the threshold distance may correspond to a maximum operational range for VHF communications between two vehicles that satisfies a desired quality. In other embodiments, the second vehicle uses SATCOM to send the information directly to the first vehicle.

The above described system and methods are particularly beneficial to vehicles operating where communications with ground stations are not available or where ground stations cannot measure information regarding the vehicles using sensors positioned on the ground. For example, for an aircraft or marine vehicle making a trans-oceanic journey, a ground station may not be available to provide additional information regarding the vehicles location, speed, altitude, etc. By receiving information obtained by other vehicles within proximity of the first vehicle, the first vehicle is able to monitor the integrity of the own ship data provided by its one or more onboard sensors throughout its operation. Using the above systems and methods, the vehicle is able to determine errors in data provided by one or more onboard sensors prior to a potential fault condition being detected using resources only on the first vehicle. Earlier notification of an integrity problem with the data from the one or more onboard sensors increases the awareness of the pilots of the vehicle regarding faulty data provided by an onboard sensor due to icing or other hazardous operating conditions. This increased awareness may prevent a loss of control of the vehicle or a fatal accident that would occur using common fault detection techniques.

In various alternative embodiments, system elements, method steps, or examples described throughout this disclosure (such as the at least one processor, for example) may be implemented on one or more computer systems, field programmable gate array (FPGA), application specific integrated circuit (ASIC) or similar devices comprising hardware executing code to realize those elements, processes, or examples, said code stored on a non-transient data storage device. Therefore other embodiments of the present disclosure may include such hardware as well as elements comprising program instructions resident on computer readable media which when implemented by such computer systems, enable them to implement the embodiments described herein. As used herein, the term "computer readable media" refers to tangible memory storage devices having non-transient physical forms. Such non-transient physical forms may include computer memory devices, such as but not limited to punch cards, magnetic disk or tape, any optical data storage system, flash read only memory (ROM), non-volatile ROM, programmable ROM (PROM), erasable-programmable ROM (E-PROM), random access memory (RAM), or any other form of permanent, semi-permanent, or temporary memory storage system or device having a physical, tangible form. Program instructions include, but are not limited to computer-executable instructions executed by computer system processors and hardware description languages such as Very High Speed Integrated Circuit (VHSIC) Hardware Description Language (VHDL).

### Example Embodiments

Example 1 includes a system on a first vehicle, comprising: one or more onboard sensors configured to obtain data regarding the first vehicle; and at least one processor coupled to a memory, wherein the at least one processor is configured to: receive information regarding the first vehicle from a second vehicle, wherein the received information is obtained using at least one respective sensor from the second vehicle; and monitor integrity of the data from the one or more onboard sensors using the received information from the second vehicle prior to detecting a potential fault in the one or more onboard sensors from resources onboard the first vehicle.

Example 2 includes the system of Example 1, wherein monitor integrity of the data from the one or more onboard sensors using the received information from the second vehicle includes determining whether a difference between the data from the one or more onboard sensors and the received information from the second vehicle exceeds a threshold; and when the difference exceeds the threshold, the processor is further configured to at least one of: output an alert; or operate the first vehicle using the received information from the second vehicle instead of the data from the one or more onboard sensors, wherein the received information from the second vehicles is timestamped.

Example 3 includes the systems of any of Examples 1-2, wherein the first vehicle is configured to provide the data from the one or more onboard sensors to the second vehicle, wherein the second vehicle is configured to: determine whether a difference between the data from the one or more onboard sensors and the information obtained using at least one respective sensor from the second vehicle exceeds a threshold; and when the difference exceeds the threshold, output an alert to at least one of: the first vehicle; air traffic control; airline operations; or one or more other surrounding vehicles.

Example 4 includes the system of any of Examples 1-3, wherein the first vehicle is configured to provide the data from the one or more onboard sensors to an external system, wherein the second vehicle is configured to provide the information obtained using at least one respective sensor from the second vehicle to the external system, wherein the external system is configured to: determine whether a difference between the data from the one or more onboard sensors and the information obtained using at least one respective sensor from the second vehicle exceeds a threshold; and when the difference exceeds the threshold, output an alert to at least one of: the first vehicle; the second vehicle; air traffic control; airline operations; or one or more other surrounding vehicles.

Example 5 includes the system of any of Examples 1-4, wherein the processor is further configured to evaluate the quality or integrity of the received information from the second vehicle based on at least one of: a position of the second vehicle with respect to the first vehicle; an amount of coverage of the first vehicle by the at least one respective sensor from the second vehicle; or a difference between the information received and the data obtained from the one or more onboard sensors.

Example 6 includes the system of any of Examples 1-5, wherein the at least one sensor from the second vehicle includes at least one of: a Global Navigation Satellite System (GNSS) sensor; an Enhanced Ground Proximity Warning System (EGPWS); a millimeter wave radar; ADS-B IN and OUT; a radar system; a Light Detection and Ranging (LIDAR) system; an Enhanced Vision System (EVS); or a Traffic Collision Avoidance System (TCAS).

Example 7 includes the system of any of Examples 1-6, wherein the one or more onboard sensors configured to obtain data regarding the first vehicle are a different type of sensor than the at least one sensor from the second vehicle.

Example 8 includes a method of evaluating sensor data of a first vehicle, comprising: receiving data from one or more sensors onboard the first vehicle; receiving information regarding the first vehicle from one or more second vehicles, wherein the received information from each of the one or more second vehicles is obtained using at least one respective sensor of the respective one or more second vehicles; and monitoring integrity of the data from the one or more sensors onboard the first vehicle using the received information from the one or more second vehicles prior to detecting a potential fault in the one or more onboard sensors from resources onboard the first vehicle.

Example 9 includes the method of Example 8, wherein monitoring integrity of the data from the one or more onboard sensors using the received information from the one or more second vehicles includes determining whether a difference between the data obtained from the one or more onboard sensors and the received information from the one or more second vehicles exceeds a threshold; and when the difference exceeds the threshold, the method further comprising: outputting an alert; or operating the first vehicle using the received information from the one or more second vehicles instead of the data from the one or more onboard sensors, wherein the received information from the one or more second vehicles is timestamped.

Example 10 includes the method of Example 9, wherein monitoring integrity of the data from the one or more onboard sensors using the received information from the one or more second vehicles is performed by at least one of: the first vehicle; the one or more second vehicles; or an external system in communication with the first vehicle and the one or more second vehicles.

Example 11 includes the method of any of Examples 9-10, wherein the one or more second vehicles includes a plurality of second vehicles, the method further comprising: evaluating the quality or integrity of the information received from each respective second vehicle of the plurality of second vehicles based on at least one of: a position of the respective second vehicle with respect to the first vehicle; an amount of coverage of the first vehicle by the at least one respective sensor from the respective second vehicle; a difference between the respective information received and the data obtained from the one or more onboard sensors; or a difference between the respective information and the information obtained from other respective second vehicles.

Example 12 includes the method of Example 11, further comprising combining received information from the plurality of second vehicles; wherein monitoring integrity of the data from the one or more onboard sensors using the received information from the plurality of vehicles includes determining whether a difference between the data obtained from the one or more onboard sensors and the combined received information from the plurality of second vehicles exceeds a threshold.

Example 13 includes the method of Example 12, wherein combining received information from weighting the received information from each of the two or more vehicles based on the quality or integrity of the respective received information from the two or more vehicles.

Example 14 includes a system on a first vehicle, comprising: one or more onboard sensors configured to obtain data regarding the first vehicle; and at least one processor coupled to a memory, wherein the at least one processor is configured to: receive information regarding the first vehicle from a plurality of second vehicles, wherein the information received from each respective second vehicle of the plurality of second vehicles is obtained using at least one respective sensor from the respective second vehicle; and monitor integrity of the data from the one or more onboard sensors using the received information from the plurality of second vehicles prior to detecting a potential fault in the one or more onboard sensors from resources onboard the first vehicle.

Example 15 includes the system of Example 14, wherein monitor integrity of the data from the one or more onboard sensors using the received information from the plurality of second vehicles includes determining whether a difference between the data obtained from the one or more onboard sensors and the received information from the plurality of second vehicles exceeds a threshold; and when the difference exceeds the threshold, the processor is further configured to at least one of: output an alert; or operate the first vehicle using the received information from the plurality of second vehicles instead of the data from the one or more onboard sensors, wherein the received information from the one or more second vehicles is timestamped.

Example 16 includes the system of Example 15, wherein the at least one processor is further configured to: evaluate the quality or integrity of the information received from each respective second vehicle of the plurality of second vehicles based on at least one of: a position of the respective second vehicle with respect to the first vehicle; an amount of coverage of the first vehicle by the at least one respective sensor from the respective second vehicle; a difference between the respective information received and the data obtained from the one or more onboard sensors; or a difference between the respective information and the information obtained from other respective second vehicles.

Example 17 includes the system of Example 16, wherein the at least one processor is further configured to determine the position of the respective second vehicle with respect to the first vehicle using measurements from the one or more onboard sensors.

Example 18 includes the system of any of Examples 16-17, wherein the at least one processor is further configured to combine received information from the plurality of second vehicles, wherein monitor integrity of the data from the one or more onboard sensors using the received information from the plurality of second vehicles includes determining whether a difference between the data obtained from the one or more onboard sensors and the combined received information from the plurality of second vehicles exceeds a threshold.

Example 19 includes the system of any of Examples 15-18, wherein the at least one processor is further configured to rank the information received from the plurality of second vehicles based on the quality or integrity of the information received from each respective vehicle of the plurality of second vehicles.

Example 20 includes the system of any of Examples 14-19, wherein the first vehicle is configured to provide the data from the one or more onboard sensors to at least one of the plurality of second vehicles, wherein the at least one of the plurality of second vehicles is configured to: determine whether a difference between the data from the one or more onboard sensors and the information obtained using at least one respective sensor from the second vehicle exceeds a threshold; and when the difference exceeds the threshold, output an alert to at least one of: the first vehicle; air traffic control; airline operations; or one or more surrounding vehicles.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. A system on a first vehicle, comprising:
one or more onboard sensors configured to obtain data regarding the first vehicle; and
at least one processor coupled to a memory, wherein the at least one processor is configured to:
receive information regarding the first vehicle from a second vehicle, wherein the received information is obtained using at least one respective sensor from the second vehicle; and
monitor integrity of the data from the one or more onboard sensors using the received information from the second vehicle prior to detecting a potential fault in the one or more onboard sensors from resources onboard the first vehicle.

2. The system of claim 1, wherein monitor integrity of the data from the one or more onboard sensors using the received information from the second vehicle includes determining whether a difference between the data from the one or more onboard sensors and the received information from the second vehicle exceeds a threshold; and
when the difference exceeds the threshold, the processor is further configured to at least one of:
output an alert; or
operate the first vehicle using the received information from the second vehicle instead of the data from the one or more onboard sensors, wherein the received information from the second vehicles is timestamped.

3. The system of claim 1, wherein the first vehicle is configured to provide the data from the one or more onboard sensors to the second vehicle, wherein the second vehicle is configured to:
determine whether a difference between the data from the one or more onboard sensors and the information obtained using at least one respective sensor from the second vehicle exceeds a threshold; and
when the difference exceeds the threshold, output an alert to at least one of: the first vehicle; air traffic control; airline operations; or one or more other surrounding vehicles.

4. The system of claim 1, wherein the first vehicle is configured to provide the data from the one or more onboard sensors to an external system, wherein the second vehicle is configured to provide the information obtained using at least one respective sensor from the second vehicle to the external system, wherein the external system is configured to:
determine whether a difference between the data from the one or more onboard sensors and the information obtained using at least one respective sensor from the second vehicle exceeds a threshold; and
when the difference exceeds the threshold, output an alert to at least one of: the first vehicle; the second vehicle; air traffic control; airline operations; or one or more other surrounding vehicles.

5. The system of claim 1, wherein the processor is further configured to evaluate the quality or integrity of the received information from the second vehicle based on at least one of:
a position of the second vehicle with respect to the first vehicle;
an amount of coverage of the first vehicle by the at least one respective sensor from the second vehicle; or
a difference between the information received and the data obtained from the one or more onboard sensors.

6. A method of evaluating sensor data of a first vehicle, comprising:
receiving data from one or more sensors onboard the first vehicle;
receiving information regarding the first vehicle from one or more second vehicles, wherein the received information from each of the one or more second vehicles is obtained using at least one respective sensor of the respective one or more second vehicles; and
monitoring integrity of the data from the one or more sensors onboard the first vehicle using the received information from the one or more second vehicles prior to detecting a potential fault in the one or more onboard sensors from resources onboard the first vehicle.

7. The method of claim 6, wherein monitoring integrity of the data from the one or more onboard sensors using the received information from the one or more second vehicles includes determining whether a difference between the data obtained from the one or more onboard sensors and the received information from the one or more second vehicles exceeds a threshold; and
when the difference exceeds the threshold, the method further comprising:
outputting an alert; or
operating the first vehicle using the received information from the one or more second vehicles instead of the data from the one or more onboard sensors, wherein the received information from the one or more second vehicles is timestamped.

8. The method of claim 6, wherein monitoring integrity of the data from the one or more onboard sensors using the received information from the one or more second vehicles is performed by at least one of:
the first vehicle;
the one or more second vehicles; or
an external system in communication with the first vehicle and the one or more second vehicles.

9. The method of claim 7, wherein the one or more second vehicles includes a plurality of second vehicles, the method further comprising:
evaluating the quality or integrity of the information received from each respective second vehicle of the plurality of second vehicles based on at least one of:
a position of the respective second vehicle with respect to the first vehicle;
an amount of coverage of the first vehicle by the at least one respective sensor from the respective second vehicle;
a difference between the respective information received and the data obtained from the one or more onboard sensors; or
a difference between the respective information and the information obtained from other respective second vehicles.

10. The method of claim 9, further comprising combining received information from the plurality of second vehicles;
wherein monitoring integrity of the data from the one or more onboard sensors using the received information from the plurality of vehicles includes determining whether a difference between the data obtained from the one or more onboard sensors and the combined received information from the plurality of second vehicles exceeds a threshold.
